# FASCICULE DE BREVET EUROPEEN

(11) **EP 0 868 266 B1**
(45) Date de publication et mention de la délivrance du brevet: **05.09.2001**
(21) Numéro de dépôt: 96941094.3
(22) Date de dépôt: 02.12.1996
(51) Int. Cl.: B25G 1/08, B25G 1/10, B29C 33/12

(54) **PROCEDE DE FABRICATION D'UN MANCHE D'OUTIL, ET OUTIL CORRESPONDANT**
VERFAHREN ZUR HERSTELLUNG EINES WERKZEUGHANDGRIFFES UND DAZUGEHÖRIGES WERKZEUG
METHOD FOR MAKING A TOOL HANDLE, AND RELATED TOOL

(30) Priorité: 01.12.1995 FR 9514233
(43) Date de publication de la demande: 07.10.1998
(73) Titulaire: BOST GARNACHE INDUSTRIES, F-39600 Arbois (FR)
(72) Inventeur: GOMAS, Hervé, Gilbert, Maurice, F-77310 Saint-Fargeau (FR)
(74) Mandataire: Jacobson, Claude
(86) Numéro de dépôt international: FR9601912
(87) Numéro de publication internationale: WO9720665

(56) Documents cités:
- EP-A- 0 208 942
- EP-A- 0 312 775
- EP-A- 0 600 812
- WO-A-93/16846
- WO-A-94/12322
- FR-A- 2 429 653
- GB-A- 1 578 372
- US-A- 3 683 984
- US-A- 5 354 239

## Description

La présente invention est relative à un procédé de fabrication d'un manche d'outil en matière moulée. Elle s'applique en particulier à la fabrication des tournevis à embouts interchangeables. De tels tournevis sont décrits dans les documents GB-A-1 578 372, WO-A-94/12322 et FR-A-2 429 653.

L'invention a pour but de permettre la fabrication d'un outil à accessoires interchangeables rangés à l'intérieur du manche, en utilisant le moule de fabrication d'un outil classique à manche monobloc ayant, au moins dans sa partie courante, la même configuration.

A cet effet, l'invention a pour objet un procédé de fabrication d'un manche d'outil, comprenant les étapes décrites dans la revendication 1.

Ce procédé peut comporter une ou plusieurs des caractéristiques des revendications 2 à 8.

L'invention a également pour objet, de façon correspondante, un outil tel que défini par la revendication 9.

Cet outil peut comporter une ou plusieurs des caractéristiques des revendications 10 à 12. Un procédé de fabrication d'un manche d'outil conforme au préambule de la revendication 1 est, par exemple, décrit dans le document GB-A-1 578 372 précité. Un outil du type défini dans le préambule de la revendication 9 est connu de l'art antérieur par le document WO-A-94/12322 précité.

Un exemple de mise en oeuvre de l'invention va maintenant être décrit en regard du dessin annexé sur lequel :
- la Figure 1 illustre schématiquement, en coupe longitudinale, le moulage du manche d'un tournevis suivant l'invention;
- la Figure 2 est une vue en coupe longitudinale du tournevis terminé;
- la Figure 3 est une vue en élévation du bouchon amovible du tournevis de la Figure 2;
- les Figures 4 et 5 sont des vues en coupe prises respectivement suivant les lignes IV-IV et V-V de la Figure 3; et
- la Figure 6 est une vue en perspective du même bouchon amovible.

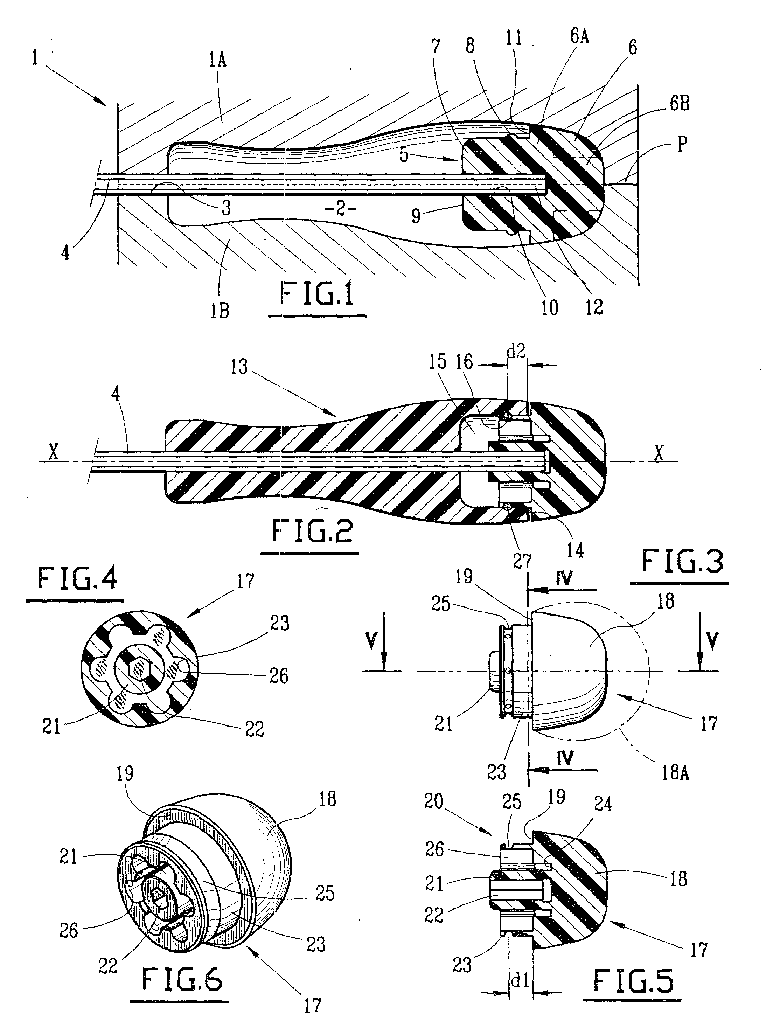

On a représenté schématiquement sur la Figure 1 les deux moitiés 1A et 1B d'un moule d'injection 1 dont le plan de joint P est supposé perpendiculaire au plan du dessin.

La paroi intérieure du moule délimite une cavité de moulage 2 ayant la forme du manche du tournevis à réaliser. L'extrémité avant de cette cavité communique avec l'extérieur du moule via un conduit 3 dont la section transversale est conjuguée de celle de la lame 4 du tournevis. Ce conduit est muni de moyens d'étanchéité appropriés non représentés, et le moule est équipé de tous les accessoires classiques permettant l'injection de matière plastique dans la cavité 2.

Pour réaliser le moulage, on utilise un obturateur auxiliaire 5 constitué d'un matériau dont le point de fusion est plus élevé que celui de la matière plastique injectée. Compte-tenu des dilatations thermique's, ce matériau est de préférence une matière synthétique rigide à point de fusion élevée, notamment du PTFE.

L'obturateur 5 est réalisé en une seule pièce et comporte une tête arrière 6 et un prolongement avant 7. La tête 6 a exactement la forme extérieure de la partie arrière de la cavité 2. Le prolongement 7 a une forme générale cylindrique, avec une surface extérieure espacée radialement de la paroi du moule. Une nervure circulaire 8 à section en arc de cercle fait saillie en un point intermédiaire de la longueur du prolongement 8, et ce dernier comporte, à partir de sa face d'extrémité avant plane 9, un trou borgne 10. Les parties 6 et 7 de l'obturateur sont reliées par un épaulement radial 11. Le trou 10 s'étend jusqu'en un point situé légèrement en arrière de cet épaulement.

Pour réaliser le tournevis, on emboîte l'obturateur 5, par son trou 10, sur l'extrémité arrière 12 de la lame, jusqu'à ce que cette dernière bute au fond du trou 10. Les sections du trou 10 et de l'extrémité 12 sont telles que cet emboîtement s'effectue avec frottement. Dans cet exemple, la lame a sur toute sa longueur, et en particulier à son extrémité arrière, une section hexagonale, tandis que le trou 10 a une section circulaire de diamètre légèrement inférieur au cercle circonscrit à cet hexagone.

Le moule est ensuite fermé autour de l'ensemble lame-obturateur, la lame traversant le conduit 3 et l'obturateur épousant exactement la partie arrière correspondante de la cavité du moule, comme représenté sur la Figure 1.

La matière plastique est alors injectée et remplit l'espace restant libre dans la cavité 2 du moule.

Après ouverture du moule, l'obturateur 5 est retiré de la lame, conduisant à l'ensemble lame-manche représenté sur la Figure 2.

Comme on le voit, le manche 13 comporte une tranche d'extrémité arrière radiale 14 correspondant à l'épaulement 11 de l'obturateur 5, et, à partir de celle-ci, une cavité 15 de forme générale cylindrique, ouverte vers l'arrière. La paroi latérale cylindrique de cette cavité comporte une gorge circulaire 16 correspondant à la nervure 8 de l'obturateur. La lame 4 traverse de part en part le manche, suivant son axe général X-X, ainsi que la cavité 15, et fait légèrement saillie à l'arrière de la tranche d'extrémité 14 du manche.

Le tournevis est complété par un porte-accessoires 17 représenté seul aux Figures 3 à 6 et dans sa position montée à la Figure 2.

Le porte-accessoires 17 est une pièce moulée en matière plastique qui présente une tête arrière 18 ayant la même configuration extérieure que la tête 6 de l'obturateur 5. La tête 18 se termine par un épaulement radial 19 et comporte un appendice intérieur 20, extérieurement cylindrique, dirigé vers l'avant.

L'appendice 20 est constitué d'une part d'un téton central cylindrique 21 muni d'un trou axial borgne 22, et d'autre part d'une jupe annulaire 23. Le trou 22 a une section hexagonale conjuguée de celle de la lame 4. Le téton 21 est bordé d'une rainure circulaire 24 pénétrant dans la tête 18, et une gorge circulaire 25 à section en arc de cercle est prévue dans la surface extérieure de la jupe 23. Une série d'alvéoles 26 à section circulaire sont ménagés, à la manière d'une rosace (Figures 4 et 6), dans la paroi intérieure de la jupe 23.

Il est à noter que la distance d1 entre le plan médian de la gorge 25 et l'épaulement 19 est quelque peu supérieure à la distance d2 séparant le plan médian de la gorge 16 du manche de sa tranche d'extrémité 14, la différence d1-d2 étant supérieure au cumul des tolérances de fabrication correspondantes et étant typiquement de l'ordre du mm.

Le montage amovible du porte-accessoires 17 s'effectue (Figure 2) en plaçant un jonc torique 27 dans la gorge 25 et en emboîtant le téton 21 sur l'extrémité arrière 12 de la lame, puis la jupe 23 dans la cavité 15, jusqu'à encliquetage du jonc 27 dans la gorge 16 du manche. Un jeu de l'ordre de d1-d2 existe alors entre l'épaulement 19 du porte-accessoires et la tranche d'extrémité arrière 14 du manche.

En pratique, on place dans chaque alvéole 26 un accessoire (non représenté) du tournevis, par exemple un embout interchangeable adapté pour se fixer de manière amovible à l'extrémité avant de la lame.

On voit que l'on a ainsi réalisé de façon simple et économique un tournevis à embouts interchangeables rangés dans le manche, au moyen du moule permettant le surmoulage sur la lame 4 du manche monobloc d'un tournevis classique de même forme extérieure. L'extrémité arrière de la lame a été utilisée successivement pour positionner l'obturateur 5 dans le moule puis pour centrer le porte-accessoires 17, et également pour positionner angulairement ce dernier grâce à la coopération des deux sections hexagonales de la lame et du téton 21.

Le jonc 27 peut être métallique ou en matière plastique. En variante, il peut être venu de moulage avec le bouchon 17.

En variante, comme indiqué en traits mixtes à la Figure 1, la tête arrière 6 de l'obturateur peut comporter, à partir de l'épaulement 11, un disque 6A qui coopère à joint étanche avec la paroi du moule, et, à partir de ce disque, une protubérance arrière centrale 6B, de diamètre réduit, qui bute contre la paroi arrière du moule.

En variante également, la tête 18 du bouchon 17 peut avoir toute forme extérieure désirée, par exemple en boule comme représenté en traits mixtes en 18A à la Figure 3. On peut ainsi réaliser une gamme de tournevis à partir d'un même moule principal 1.

Par ailleurs, la cavité 15 peut déboucher également latéralement, notamment par des encoches recevant des saillies axiales du bouchon 17.

## Revendications

1. Procédé de fabrication d'un manche d'outil (13) en matière moulée muni d'une cavité (15) dans laquelle on emmanche après le moulage un bouchon amovible (17) formant simultanément l'extrémité libre du manche, **caractérisé en ce que** :
- avant le moulage de ladite matière, on positionne dans le moule (1) un obturateur auxiliaire (5) qui comprend d'une part une partie arrière (6), laquelle comporte une zone annulaire (6A) adaptée pour coopérer à joint étanche avec la paroi du moule, et des moyens de butée arrière contre cette paroi, et d'autre part un prolongement avant (7) espacé radialement de la paroi du moule, cet obturateur auxiliaire étant constitué d'au moins un matériau ayant un point de fusion supérieur à celui de la matière à mouler, le positionnement de l'obturateur (5) dans le moule étant réalisé'en emboîtant à frottement un évidement axial (10) de cet obturateur (5) sur une tige-support (4) bloquée en rotation autour de son axe par rapport au manche moulé; et
- après le moulage de ladite matière, on retire l'obturateur auxiliaire (5) et on le remplace par un bouchon amovible (17) qui comporte d'une part une tête (18; 18A) qui forme la partie arrière (6) du manche, et d'autre part un appendice avant (20) qui s'emboîte dans la cavité (15) du manche (13) définie lors dudit moulage par le prolongement avant (7) de l'obturateur (5).

2. Procédé selon la revendication 1, **caractérisé en ce qu**'on emboîte à frottement l'obturateur (5) sur l'extrémité arrière (12) de la tige-support (4).

3. Procédé selon la revendication 1 ou 2, **caractérisé en ce qu**'on utilise comme tige-support (4) un organe de forme allongée qui fait partie de l'outil et sur lequel le manche (13) est surmoulé.

4. Procédé suivant la revendication 3, **caractérisé en ce qu**'on emboîte un évidement axial (22) du bouchon (17) sur l'extrémité arrière (12) dudit organe (4) .

5. Procédé suivant l'une quelconque des revendications 1 à 4, **caractérisé en ce que** la partie arrière (6) de l'obturateur possède la configuration de la partie d'extrémité arrière de la paroi du moule (1).

6. Procédé suivant l'une quelconque des revendications 1 à 5, **caractérisé en ce que** le prolongement avant (7) de l'obturateur auxiliaire (5) présente une nervure circulaire (8) qui forme une gorge annulaire (16) dans la paroi latérale de la cavité (15) du manche (13), l'appendice avant (20) du bouchon (17) étant muni d'un relief (27) qui s'encliquette dans cette gorge annulaire.

7. Procédé suivant l'une quelconque des revendications 1 à 6, pour la fabrication d'un manche en matière plastique, **caractérisé en ce que** l'obturateur auxiliaire (5) est réalisé en une matière synthétique à point de fusion relativement élevé, notamment en PTFE.

8. Procédé suivant l'une quelconque des revendications 1 à 7, **caractérisé en ce qu**'on utilise un moule (1) adapté pour, en l'absence de l'obturateur auxiliaire (5), mouler un manche d'outil monobloc remplaçant ledit ensemble du manche et du bouchon amovible.

9. Outil comprenant
- un manche (13) qui comporte une cavité (15) débouchant à l'arrière du manche,
- un bouchon (17) qui ferme cette cavité et comporte d'une part une tête (18; 18A) qui complète le manche à son extrémité arrière, et d'autre part un appendice avant (20) emboîté dans ladite cavité, ledit bouchon étant extractible et définissant plusieurs logements (26) pour des accessoires interchangeables de l'outil, et
- un organe métallique (4) de forme allongée qui traverse de part en part le manche suivant son axe (X-X) et dont l'extrémité arrière fait saillie dans ladite cavité, cette extrémité arrière dépassant notamment à l'arrière du manche, ledit appendice avant (20) du bouchon (17) comportant un évidement axial (22) qui s'emboîte sur l'extrémité arrière (12) dudit organe (4),
ledit manche étant surmoulé sur l'organe métallique (4), avec lequel il est solidaire en rotation de manière à trarsmettre un moment de torsion, **caractérisé en ce que** le bouchon est amovible, et en ce que l'appendice avant (20) du bouchon (17) comporte un téton central (21) muni dudit évidement axial (22), une jupe annulaire (23), et au moins un espace libre (26) entre cette jupe et le téton central.

10. Outil suivant la revendication 9, **caractérisé en ce que** l'extrémité arrière (12) dudit organe (4) a une section transversale non circulaire, notamment hexagonale, conjuguée de celle de l'évidement axial (22) du bouchon (17).

11. Outil suivant la revendication 9 ou 10, **caractérisé en ce que** les logements (26) sont répartis autour dudit téton central (21).

12. Outil suivant la revendication 11, constitué par un tournevis, ledit organe (4) étant la lame du tournevis et lesdits accessoires étant des embouts interchangeables adaptables sur l'extrémité distale de cette lame.

## Patentansprüche

1. Verfahren zum Herstellen eines Werkzeuggriffs (13) aus Gießmasse, die mit einem Hohlraum (15) versehen ist, in den nach dem Gießen ein lösbarer Stopfen (17) eingedrückt wird, der gleichzeitig das freie Ende des Griffs bildet, **dadurch gekennzeichnet**, daß:
- vor dem Gießen der Masse in der Gießform (1) ein Hilfsverschluß (5) angeordnet wird, der einerseits einen hinteren Teil (6), der eine ringförmige Zone (6A), die so beschaffen ist, daß sie über eine Dichtung mit der Wand der Gießform zusammenwirkt, sowie hintere Anschlagmittel gegen diese Wand enthält, und andererseits eine vordere Verlängerung (7), die von der Wand der Gießform radial beabstandet ist, umfaßt, wobei dieser Hilfsverschluß aus wenigstens einem Werkstoff gebildet ist, der einen Schmelzpunkt besitzt, der höher als derjenige der zu gießenden Masse ist, wobei die Anordnung des Verschlusses (5) in der Gießform durch reibschlüssiges Aufstecken einer axialen Aussparung (10) dieses Verschlusses (5) auf einen Haltestift (4), der an einer Drehung um seine Achse in bezug auf den gegossenen Griff gehindert wird, verwirklicht wird; und
- nach dem Gießen der Masse der Hilfsverschluß (5) herausgezogen wird und durch einen lösbaren Stopfen (17) ersetzt wird, der einerseits einen Kopf (18; 18A), der den hinteren Teil (6) des Griffs bildet, und andererseits einen vorderen Ansatz (20), der in den Hohlraum (15) des Griffs (13), der beim Gießen durch die vordere Verlängerung (7) des Verschlusses (5) definiert wird, eingesteckt wird, umfaßt.

2. Verfahren nach Anspruch 1, **dadurch gekennzeichnet**, daß der Verschluß (5) auf das hintere Ende (12) des Haltestifts (4) reibschlüssig aufgesteckt wird.

3. Verfahren nach Anspruch 1 oder 2, **dadurch gekennzeichnet**, daß als Haltestift (4) ein Element mit langgestreckter Form verwendet wird, das einen Teil des Werkzeugs bildet und auf dem der Griff (13) gegossen wird.

4. Verfahren nach Anspruch 3, **dadurch gekennzeichnet**, daß eine axiale Aussparung (22) des Stopfens (17) auf das hintere Ende (12) des Elements (4) aufgesteckt wird.

5. Verfahren nach einem der Ansprüche 1 bis 4, **dadurch gekennzeichnet**, daß der hintere Teil (6) des Verschlusses die Konfiguration des hinteren Endabschnitts der Wand der Gießform (1) besitzt.

6. Verfahren nach einem der Ansprüche 1 bis 5, **dadurch gekennzeichnet**, daß die vordere Verlängerung (7) des Hilfsverschlusses (5) eine kreisförmige Rippe (8) aufweist, die eine ringförmige Kehle (16) in der Seitenwand des Hohlraums (15) des Griffs (13) bildet, wobei der vordere Ansatz (20) des Stopfens (17) eine Erhebung (27) aufweist, die in diese ringförmige Kehle einrastet.

7. Verfahren nach einem der Ansprüche 1 bis 6 für die Herstellung eines Kunststoffgriffs, **dadurch gekennzeichnet**, daß der Hilfsverschluß (5) aus einem Kunststoff mit verhältnismäßig hohem Schmelzpunkt, insbesondere aus PTFE, hergestellt ist.

8. Verfahren nach einem der Ansprüche 1 bis 7, **dadurch gekennzeichnet**, daß eine Gießform (1) verwendet wird, die so beschaffen ist, daß sie bei Fehlen des Hilfsverschlusses (5) einen einteiligen Werkzeuggriff gießen kann, der die Gesamtheit aus dem Griff und dem lösbaren Stopfen ersetzt.

9. Werkzeug, mit
- einem Griff (13), der einen Hohlraum (15) aufweist, der in das hintere Ende des Griffs mündet,
- einem Stopfen (17), der diesen Hohlraum verschließt und einerseits einen Kopf (18; 18A), der den Griff an seinem hinteren Ende vervollständigt, und andererseits einen vorderen Ansatz (20), der in den Hohlraum eingesteckt ist, umfaßt, wobei der Stopfen herausziehbar ist und mehrere Aufnahmesitze (26) für austauschbares Zubehör des Werkzeugs definiert, und
- einem metallischen Element (4) mit langgestreckter Form, das durch den Griff längs seiner Achse (X-X) verläuft und dessen hinteres Ende in den Hohlraum vorsteht, wobei dieses hintere Ende insbesondere über die Rückseite des Griffs hinausragt, wobei der vordere Ansatz (20) des Stopfens (17) eine axiale Aussparung (22) aufweist, die auf das hintere Ende (12) des Elements (4) aufgesteckt ist,
wobei der Griff auf das metallische Element (4), mit dem er drehfest in der Weise verbunden ist, daß ein Torsionsmoment übertragen wird, gegossen ist, **dadurch gekennzeichnet**, daß der Stopfen lösbar ist und daß der vordere Ansatz (20) des Stopfens (17) einen mittigen Fortsatz (21), der mit der axialen Aussparung (22) versehen ist, eine ringförmige Schürze (23) sowie wenigstens einen freien Raum (26) zwischen dieser Schürze und dem mittigen Fortsatz umfaßt.

10. Werkzeug nach Anspruch 9, **dadurch gekennzeichnet**, daß das hintere Ende (12) des Elements (4) einen nicht kreisförmigen, insbesondere sechseckigen Querschnitt besitzt, der demjenigen der axialen Aussparung (22) des Stopfens (17) entspricht.

11. Werkzeug nach Anspruch 9 oder 10, **dadurch gekennzeichnet**, daß die Aufnahmesitze (26) um den mittigen Fortsatz (21) verteilt sind.

12. Werkzeug nach Anspruch 11, das durch einen Schraubendreher gebildet ist, wobei das Element (4) die Schneide des Schraubendrehers ist und das Zubehör durch die austauschbaren Einsätze gebildet ist, die an das distale Ende dieser Schneide anpaßbar sind.

## Claims

1. Method for manufacturing a tool handle (13) made of moulded material provided with a cavity (15) in which after moulding there is fitted a removable end cap (17) forming at the same time the free end of the handle, **characterised in that**:
• before moulding said material, there is positioned in the mould (1) an auxiliary plug (5) which comprises on the one hand a rear portion (6) which comprises an annular zone (6A) adapted in order to co-operate in a sealed manner with the wall of the mould, and rear stop means against this wall, and on the other hand a front extension (7) radially spaced from the wall of the mould, this auxiliary plug being formed by at least one material which has a melting point greater than that of the material to be moulded, the positioning of the plug (5) in the mould being achieved by frictionally fitting an axial recess (10) of this plug (5) on a support rod (4) which is immobilised rotationally about its axis with respect to the moulded handle; and
• after moulding of said material, the auxiliary plug (5) is removed and replaced by a removable end cap (17) which comprises on the one hand a head (18; 18A) which forms the rear portion (6) of the handle, and on the other hand a front lengthening piece (20) which fits into the cavity (15) of the handle (13) which cavity is defined during said moulding by the front extension (7) of the plug (5).

2. Method according to claim 1, **characterised in that** the plug (5) is frictionally fitted on the rear extremity (12) of the support rod (4).

3. Method according to claim 1 or 2, **characterised in that** as support rod (4) there is used a device of elongated shape which forms part of the tool and onto which the handle (13) is moulded-on.

4. Method according to claim 3, **characterised in that** an axial recess (22) of the end cap (17) is fitted on the rear extremity (12) of said device (4).

5. Method according to any of the claims 1 to 4, **characterised in that** the rear portion (6) of the plug has the configuration of the portion of the rear extremity of the wall of the mould (1).

6. Method according to any of the claims 1 to 5, **characterised in that** the front extension (7) of the auxiliary plug (5) has a circular rib (8) which forms an annular groove (16) in the lateral wall of the cavity (15) of the handle (13), the front lengthening piece (20) of the end cap (17) being provided with a relief (27) which snaps into this annular groove.

7. Method according to any of the claims 1 to 6, for the manufacture of a handle made of plastic material, **characterised in that** the auxiliary plug (5) is produced in a synthetic material with a relatively high melting point, in particular in PTFE.

8. Method according to any of the claims 1 to 7, **characterised in that** there is used a mould (1) which is adapted, in the absence of the auxiliary plug (5), for moulding a monobloc tool handle which replaces said assembly of handle and removable end cap.

9. Tool comprising
• a handle (13) which comprises a cavity (15) opening towards the rear of the handle,
• an end cap (17) which closes this cavity and comprises on the one hand a head portion (18; 18A) which completes the handle at its rear extremity, and on the other hand a front lengthening piece (20) fitted in said cavity, said end cap being extractable and defining a plurality of housings (26) for interchangeable accessories of the tool, and
• a metallic device (4) of elongated shape which passes through the handle according to its axis (X-X) and the rear extremity of which projects into said cavity, this rear extremity projecting in particular to the rear of the handle, said front lengthening piece (20) of the end cap (17) comprising an axial recess (22) which fits on the rear extremity (12) of said device (4), said handle being moulded onto the metallic device (4) with which it is integral in rotation in such a manner as to transmit a torsional moment, **characterised in that** the end cap is removable, and in that the front lengthening piece (20) of the end cap (17) comprises a central lug (21) provided with said axial recess (22), an annular skirt (23), and at least one free space (26) between this skirt and the central lug.

10. Tool according to claim 9, **characterised in that** the rear extremity (12) of said device (4) has a non-circular transverse section, in particular hexagonal, paired to that of the axial recess (22) of the end cap (17).

11. Tool according to claim 9 or 10, **characterised in that** the housings (26) are distributed around said central lug (21).

12. Tool according to claim 11, comprising a screwdriver, said device (4) being the blade of the screwdriver and said accessories being the interchangeable connectors which are adaptable on the distal extremity of this blade.
